# FASCICULE DE BREVET EUROPEEN

(11) **EP 2 547 489 B1**
(45) Date de publication et mention de la délivrance du brevet: **05.11.2014**
(21) Numéro de dépôt: 11715942.6
(22) Date de dépôt: 18.03.2011
(51) Int. Cl.: B23P 15/04, F01D 5/28, F01D 5/14, B23K 20/18, B23K 20/02, B21D 53/78

(54) **PROCÉDÉ DE RÉALISATION D'UN RENFORT MÉTALLIQUE D' AUBE DE TURBOMACHINE**
VERFAHREN ZUR HERSTELLUNG EINER METALLVERSTÄRKUNG FÜR EINE TURBOMASCHINENSCHAUFEL
METHOD FOR MAKING A METAL REINFORCEMENT FOR A TURBINE ENGINE BLADE

(30) Priorité: 19.03.2010 FR 1051992
(43) Date de publication de la demande: 23.01.2013
(73) Titulaire: SNECMA, 75015 Paris (FR)
(72) Inventeur: FRANCHET, Jean-Michel, Patrick, Maurice, 75018 Paris (FR); KLEIN, Gilles, Charles, Casimir, 95540 Méry-sur-Oise (FR)
(74) Mandataire: Gevers France
(86) Numéro de dépôt international: PCT/FR2011/050554
(87) Numéro de publication internationale: WO 2011/114073

(56) Documents cités:
- EP-A1- 0 192 105
- EP-A1- 0 245 548
- EP-A1- 1 574 270
- EP-A2- 0 468 221
- FR-A1- 2 319 008
- US-A- 2 799 919

## Description

Le domaine de la présente invention est celui de la fabrication de pièces métalliques, selon le préambule de la revendication 1, et plus particulièrement celui de la fabrication de bords d'attaque ou de bords de fuite en titane pour l'aéronautique, comme par exemple des bords d'attaque pour des aubes de soufflante de turbomachines, à large corde, qui sont réalisées en matériau composite. Un tel procédé est connu de la demande de brevet FR 2319008.

Les aubes de fan des turboréacteurs sont maintenant, pour des raisons de poids et de coûts, réalisées majoritairement en matériau composite. Ces pièces qui sont soumises à d'importantes contraintes mécaniques, dues à leur vitesse de rotation et à la charge aérodynamique qu'elles supportent, doivent en outre résister aux éventuels impacts de particules ou de corps étrangers qui pénétreraient dans la veine d'air. Pour cela elles sont protégées au niveau de leur bord d'attaque et/ou de leur bord de fuite, par une pièce métallique qui recouvre leurs extrémités et qui est collée sur le matériau composite de la pale. On connait à cet effet une réalisation décrite dans la demande de brevet FR 2319008.

La gamme actuelle de fabrication des bords d'attaque en titane pour des aubes fan en composite est lourde et complexe à mettre en oeuvre, ce qui implique des coûts importants. Elle est en effet principalement basée sur des opérations de formage à chaud, ce qui nécessite des outillages qui résistent aux températures pratiquées, comme par exemple celle décrite dans la demande de brevet EP 0192105. Elle nécessite en outre la réalisation d'usinages importants tant au stade des pièces intermédiaires qu'au stade final de la réalisation.

Pour des raisons de poids et de tenue mécanique ces bords d'attaque ou de fuite sont généralement réalisés en titane et sont d'une épaisseur relativement faible. Compte tenu de cette faible épaisseur, l'emploi d'un procédé de fabrication comprenant l'assemblage de tôles par un procédé de formage superplastique et soudage par diffusion (SPFDB pour Super Plastic Forming and Diffusion Bonding), a naturellement été proposé. Un tel procédé est décrit dans la demande de brevet EP 1574270 de la demanderesse.

Mais ce procédé a pour inconvénient qu'il ne permet que difficilement de maîtriser la forme intérieure de la cavité et en particulier il limite les possibilités pour un raccordement optimal des tôles au niveau de l'extrémité de la cavité. Il est, en effet, important pour la tenue mécanique du bord d'attaque, de réaliser une jonction entre les deux tôles qui présente une tangente commune, transversale à l'axe longitudinal de la cavité et, si possible, qui présente un grand rayon de courbure, choses que ne permet pas le procédé SPFDB.

La présente invention a pour but de remédier à ces inconvénients en proposant un procédé de fabrication de bords d'attaque ou de bords de fuite en titane, qui offre des possibilités accrues pour la réalisation de la cavité de bord d'attaque et/ou de fuite et dont les coûts de réalisation soient modérés.

A cet effet, l'invention a pour objet un procédé de réalisation d'un insert métallique pour la protection d'un bord d'attaque ou de fuite d'une aube de compresseur d'une machine aéronautique réalisée en matériau composite, par matriçage de tôles et soudage entre elles par diffusion selon la revendication 1.

L'utilisation de la compression isostatique à chaud associée à un noyau permet d'obtenir une continuité dans la courbure de la cavité interne de l'insert métallique et ainsi d'éviter des concentrations de contraintes à la pointe de la cavité.

De façon préférentielle le noyau a sur la moitié de chaque face la forme à donner à l'extrados des tôles et sur son autre moitié la forme à donner à l'intrados des tôles, de façon à réaliser deux inserts à chaque opération.

On double ainsi la vitesse de production des inserts de bords d'attaque et/ou de fuite et on améliore la productivité du poste de travail.

Avantageusement le noyau présente une dépression longitudinale sur la moitié de chacune des faces, de manière à rendre visibles, après la compression isostatique à chaud, les lignes de découpe séparant les deux inserts.

Avec cette dépression visible de l'extérieur, le compagnon sait où découper l'ensemble pour séparer les deux bords d'attaque réalisés.

Dans un mode de réalisation le matriçage initial des tôles génère un logement au niveau de la pointe du bord d'attaque ou de fuite.

Ce logement sert à y insérer un renfort qui se diffusera dans le matériau de l'insert lors de la compression isostatique à chaud, pour en accroître la tenue mécanique.

Avantageusement, dans ce mode de réalisation, un renfort en fibre composites est placé dans le logement lors du positionnement des tôles autour dudit noyau.

De façon préférentielle le noyau est réalisé en matériau réfractaire.

Dans un autre mode de réalisation le noyau est réalisé en un matériau métallique dont le coefficient de dilatation est différent de celui des tôles.

Dans ce mode de réalisation le noyau est avantageusement recouvert d'une barrière anti-diffusion non contaminante pour le matériau métallique des tôles.

Préférentiellement, le matériau métallique du noyau est un alliage de titane ou de nickel et la barrière est de l'oxyde d'yttrium.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'une étape de formage des tôles, au cours de la réalisation d'un bord d'attaque par un procédé selon un mode de réalisation de l'invention ;
- la figure 2 est une vue schématique d'une étape de pré-assemblage des tôles au cours de la réalisation d'un bord d'attaque par un procédé selon un mode de réalisation de l'invention ;
- la figure 3 est une vue schématique d'une étape d'assemblage des tôles au cours de la réalisation d'un bord d'attaque par un procédé selon un mode de réalisation de l'invention ;
- la figure 4 est une vue schématique d'une étape de découpe des tôles au cours de la réalisation d'un bord d'attaque par un procédé selon un mode de réalisation de l'invention ;
- la figure 5 est une vue schématique d'un bord d'attaque réalisé à l'aide d'un procédé selon un mode de réalisation de l'invention ;
- la figure 6 est une vue de la partie avant d'un bord d'attaque lors de l'étape de formage des tôles selon une variante du procédé selon l'invention.

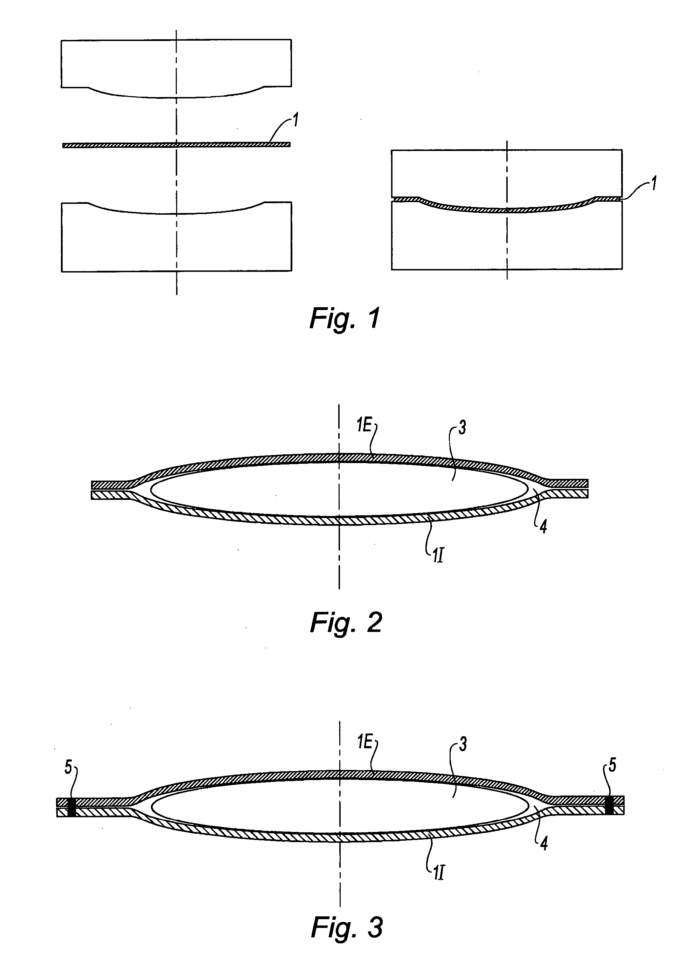

En se référant à la figure 1, on voit, en deux étapes, une opération de formage à chaud d'une tôle 1 en titane afin de lui donner une forme interne qui corresponde approximativement à la forme externe d'un noyau réfractaire, ledit noyau ayant la forme précise à donner à la cavité interne du bord d'attaque. Deux tôles sont ainsi formées successivement, dont l'une a vocation à devenir l'extrados 1E du bord d'attaque et l'autre son intrados 1I.

La figure 2 montre un noyau 3, en matériau réfractaire (ou en un alliage métallique, tel que de l'IN100, qui présente un coefficient de dilatation très différent de celui du titane du bord d'attaque), entouré par deux tôles 1 E et 1I préformées, comme indiqué précédemment, pour s'adapter au noyau sur une grande partie de leur longueur. On remarque que les deux tôles ne sont pas conformées pour se rejoindre, après assemblage, en se faisant face selon un angle plat au niveau de la pointe du bord d'attaque, mais qu'elles se terminent par des parties qui sont sensiblement parallèles et alignées selon le plan médian du noyau. En conséquence les deux tôles n'enveloppent pas précisément le noyau sur lequel elles vont être assemblées au niveau de la pointe du bord d'attaque. Un espace résiduel 4 est laissé qui sera résorbé au cours des étapes ultérieures.

Dans cette configuration les tôles sont assemblées par pointage (non visible sur la figure) et soudage TIG (soudage à l'arc avec une électrode non fusible en tungstène, sous atmosphère inerte), afin de les lier l'une à l'autre et les maintenir en place sur le noyau 3.

La figure 3 montre le résultat d'une étape d'assemblage des deux tôles 1E et 1I, autour du noyau réfractaire, au moyen d'un soudage par faisceau d'électron (FE). Celui-ci est effectué le long d'un cordon 5, parallèlement aux bords latéraux des tôles, comme indiqué sur la figure 3, mais aussi aux extrémités transversales de la pièce (non représentées).

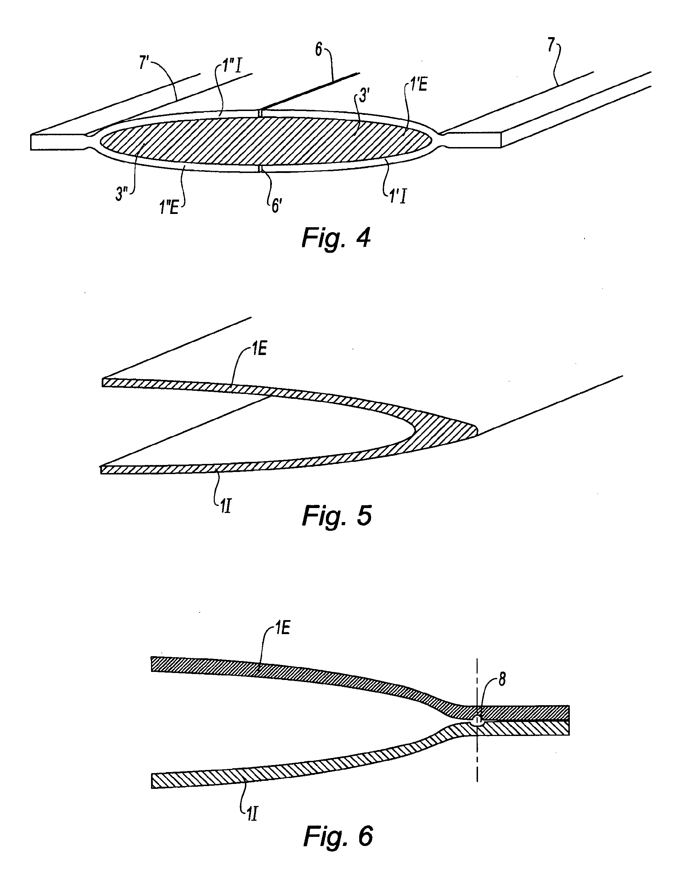

La figure 4 montre le bord d'attaque réalisé après un assemblage des tôles par un procédé de compression isostatique à chaud (ou HIP pour high isostatic pressure). Le procédé HIP génère une déformation des tôles 1 qui viennent se plaquer contre le noyau 3 dont elles épousent parfaitement la forme. A l'issue de cette étape, les espaces résiduels 4 ont été supprimées.

La figure 4 montre également comment s'effectuent certaines des étapes qui suivent celle de la compression HIP. En premier lieu il convient de remarquer que chaque tôle 1 a été préformée de façon à approcher l'extrados IE du bord d'attaque sur une première moitié et l'intrados 1I sur son autre moitié. De même le noyau 3 est conformé pour présenter un axe longitudinal de symétrie, en représentant la forme interne du bord d'attaque sur une de ses moitiés 3' et la même forme sur l'autre moitié 3", mais positionnée cette fois sur la face opposée du noyau. Les deux formes internes se faisant face par le plan médian transverse du noyau 3, cela permet de réaliser deux bords d'attaque simultanément.

La partie droite de la figure montre ainsi un premier bord d'attaque réalisé par association de la demi-tôle d'extrados l'E positionnée sur la face supérieure du noyau avec la demi-tôle d'intrados l'I positionnée sur la face inférieure, alors que la partie gauche montre un second bord d'attaque réalisé à partir de la demi-tôle d'intrados 1"I et de la demi-tôle d'extrados 1"E.

La figure 4 montre également deux lignes de découpe 6 et 6' qui s'étendent le long du plan médian transverse de l'ensemble formé par les tôles 1 et par le noyau 3. Elles permettent de séparer les deux bords d'attaque l'un de l'autre après la réalisation de la compression HIP. Elle montre enfin deux lignes de détourage 7 et 7' le long desquelles est pratiqué l'enlèvement de la matière excédentaire sur les côtés latéraux des deux bords d'attaque.

La figure 5 montre un bord d'attaque en fin de réalisation, après séparation de sa pièce jumelle et finition du profil par un usinage approprié.

La figure 6 présente une variante du procédé selon l'invention dans laquelle l'étape de formage s'effectue en ménageant un logement 8 entre les deux tôles en extrémité de l'espace résiduel 4, de chaque côté du noyau 3. Le logement est positionné de façon à se retrouver au niveau de la pointe du bord d'attaque après la compression HIP. Ce logement a, tel que représenté mais sans que ce soit impératif, une forme tubulaire pour pouvoir y insérer un renfort cylindrique en fibres composites.

On va maintenant décrire le déroulement de la fabrication simultanée de deux bords d'attaque par un procédé selon un mode de réalisation de l'invention.

L'opération débute par une opération classique de matriçage qui amène les tôles dans une forme proche de celle souhaitée pour le bord d'attaque. Alors que dans l'art antérieur le formage devait être précis pour aboutir à une pièce aux dimensions quasiment définitives, ici, le formage n'est utilisé que comme moyen d'approcher la forme voulue, avec pour objectif de simplifier la tâche de formage à chaud ultérieure. En complément, dans l'art antérieur, le matriçage pouvait s'accompagner de l'apparition de vagues sur la surface de la tôle après formage, surtout si l'on cherchait à réaliser une pièce présentant un fort coefficient de vrillage. Ce phénomène n'existe plus avec l'invention, la déformation en formage étant moins sévère.

La forme donnée à la matrice est telle qu'elle donne la forme de l'extrados à une moitié de la tôle et la forme de l'intrados sur son autre moitié. Deux tôles sont ainsi formées, l'une destinée à être placée sur la partie supérieure du noyau et une seconde sur sa partie inférieure, en vis-à-vis de la première.

Les deux tôles sont assemblées autour du noyau par une opération de pointage et de soudage TIG, le long des bords latéraux des tôles. L'ensemble est ensuite placé dans une enceinte de mise sous vide pour la réalisation d'un soudage par faisceau d'électrons. Un cordon de soudure 5 ininterrompu est réalisé à la fois le long des bords latéraux des tôles mais aussi sur leur bords transversaux, ce qui permet d'entourer complètement le noyau 3 et de refermer l'ensemble. Le vide est ainsi maintenu entre les tôles 1 et le noyau 3, et en particulier dans les espaces résiduels 4 laissés entre les tôles 1E, 1I et les pointes du noyau 3. Il convient de remarquer que l'opération de mise sous vide, qui est nécessaire pour le soudage par faisceau d'électrons, aurait aussi été nécessaire pour l'exécution de l'étape suivante du procédé selon l'invention. La combinaison de ces deux opérations de mise sous vide, aboutit à une simplification du procédé et participe ainsi à l'atteinte de l'objectif de réduction du coût de réalisation du bord d'attaque.

L'ensemble constitué par le noyau 3 et les deux tôles 1E et 1I subit ensuite une opération de compression isostatique à chaud, conduite à une température d'environ 940°C, dans le cas considéré d'une aube en alliage de titane TA6V. A cette température le métal est relativement mou et peut fluer sous l'action de la pression, d'environ 1000 bars, qui lui est appliquée. Les deux tôles se déforment pour venir épouser parfaitement la forme du noyau 3 et supprimer les espaces résiduels 4. En particulier les deux tôles se rejoignent au niveau de la pointe du noyau selon un angle plat. Parallèlement, sous l'effet de la chaleur, les deux tôles se soudent par diffusion. La combinaison des deux phénomènes conduit à former une cavité interne au bord d'attaque qui a exactement la forme du noyau et qui présente, à sa pointe, un rayon de courbure de la taille désirée. Du fait de la température adoptée le rayon de courbure est réalisé sans l'apparition d'un coefficient de contraintes en ce point, comme c'était le cas dans l'art antérieur.

La suite des opérations consiste à désassembler les deux bords d'attaque réalisés en pratiquant deux découpes 6 et 6' le long du plan médian transverse de l'ensemble renfermant le noyau 3. Pour faciliter cette opération le noyau présente préférentiellement le long des lignes de découpe une dépression longitudinale, non représentée sur les figures, qui marque l'emplacement des lignes de découpe. Au cours de la compression HIP le métal des tôles flue et vient remplir la dépression du noyau 3 et recréer une dépression sur la face externe des tôles qui sera visible de l'extérieur. L'opérateur sait ainsi où pratiquer les deux découpes 6 et 6'.

Par ailleurs le noyau est réalisé dans un matériau choisi de façon à ce qu'il n'y ait pas adhérence des tôles sur lui. Ce matériau est généralement un matériau réfractaire, avec lequel il n'y a pas diffusion du titane, ou un matériau métallique ayant un coefficient de dilatation différent de celui utilisé pour les tôles. Ces différences de dilatation évitent, dans ce cas, le collage des tôles 1 sur le noyau 3 lors de l'opération de compression HIP. Dans un mode particulier de réalisation, le noyau en matériau métallique est, par ailleurs, recouvert d'une barrière anti-diffusion non contaminante pour le titane, tel que de l'oxyde d'yttrium, ce qui évite tout risque de collage lors de la compression HIP.

Quel que soit le type de noyau utilisé, l'invention permet sa réutilisation, puisqu'il n'est ni détérioré ni consommé lors de la mise en oeuvre du procédé selon l'invention. Celle-ci permet donc une diminution du coût de la réalisation d'un bord d'attaque, indépendamment de la qualité obtenue pour la réalisation de sa cavité interne.

La fin du procédé comporte une étape d'enlèvement de la matière excédentaire le long des bords latéraux des deux bords d'attaque, par une découpe selon les lignes de détourage 7 et 7'. Un usinage final permet de donner la forme extérieure recherchée au bord d'attaque.

Dans la variante illustrée sur la figure 6, la matrice de préformage des tôles est conformée de façon à générer un logement 8, en extrémité de l'espace résiduel 4. Un renfort en fibre composites est placé dans ce logement au moment de l'installation des tôles 1 sur le noyau 3, avant l'opération de pointage et soudage TIG. La fibre emprisonnée dans ce logement diffuse dans le métal des tôles lors de l'opération de compression HIP et crée un renfort fibreux au niveau de la pointe du bord d'attaque. On améliore ainsi la résistance du bord d'attaque à l'érosion et aux impacts.

## Revendications

1. Procédé de réalisation d'un insert métallique pour la protection d'un bord d'attaque ou de fuite d'une aube de compresseur d'une machine aéronautique réalisée en matériau composite, par matriçage de tôles (1) et soudage entre elles par diffusion,
comportant des étapes de :
- mise en forme initiale des tôles par matriçage pour les rapprocher de la forme de l'extrados (1E) et de l'intrados (1I) dudit insert,
- réalisation d'un noyau (3) ayant la forme de la cavité interne de l'insert métallique à réaliser, une de ses faces reproduisant la forme interne de l'extrados de l'insert et l'autre face reproduisant la forme interne de l'intrados de l'insert,
- positionnement desdites tôles autour dudit noyau, et solidarisation de l'ensemble,
- mise sous vide et fermeture de l'ensemble par soudage,
- assemblage de l'ensemble ,
- découpe de l'ensemble pour extraction du noyau (3) et séparation de l'insert,
- réalisation du profil externe de l'insert par un usinage final
- **caractérisé en ce que** les deux faces du noyau se rejoignent en une pointe reproduisant la forme interne du bord d'attaque ou de fuite, **en ce que** les deux tôles se rejoignent en étant parallèles au niveau de la pointe du noyau et **en ce que** l'assemblage de l'ensemble s'effectue par compression isostatique à chaud.

2. Procédé selon la revendication 1 dans lequel le noyau (3) a sur la moitié de chaque face la forme à donner à l'extrados (1'E) des tôles et sur son autre moitié la forme à donner à l'intrados (1'I) des tôles, de façon à réaliser deux inserts à chaque opération.

3. Procédé selon la revendication 2 dans lequel le noyau (3) présente une dépression longitudinale sur la moitié de chacune des faces, de manière à rendre visibles, après la compression isostatique à chaud, les lignes de découpe (6) séparant les deux inserts.

4. Procédé selon l'une des revendications 1 à 3 dans lequel le matriçage initial des tôles génère un logement (8) au niveau de la pointe du bord d'attaque ou de fuite.

5. Procédé selon la revendication 4 dans lequel un renfort en fibre composites est placé dans le logement (8) lors du positionnement des tôles (1) autour dudit noyau (3).

6. Procédé selon l'une des revendications 1 à 5 dans lequel le noyau est réalisé en matériau réfractaire.

7. Procédé selon l'une des revendications 1 à 5 dans lequel le noyau (3) est réalisé en un matériau métallique dont le coefficient de dilatation est différent de celui des tôles (1).

8. Procédé selon la revendication 7 dans lequel le noyau (3) est recouvert d'une barrière anti-diffusion non contaminante pour le matériau métallique des tôles (1).

9. Procédé selon la revendication 8 dans lequel le matériau métallique du noyau est un alliage de titane ou de nickel et la barrière est de l'oxyde d'yttrium.

## Patentansprüche

1. Verfahren zum Herstellen eines Metalleinsatzes zum Schutz einer Vorder- oder Hinterkante einer Kompressorschaufel einer Luftfahrtmaschine, die aus Verbundmaterial hergestellt ist, durch Gesenkformen von Blechen (1) und deren Diffusionsschweißen,
das die folgenden Schritte aufweist:
- Anfangsformgeben der Bleche durch Gesenkformen, um sie an die Form der Außenseite (1 E) und der Innenseite (1I) des Einsatzes anzunähern,
- Herstellen eines Kerns (3), der die Form des inneren Hohlraums des herzustellenden Metalleinsatzes hat, wobei eine seiner Flächen die innere Form der Außenseite des Einsatzes wiedergibt und die andere Fläche die innere Form der Innenseite des Einsatzes wiedergibt,
- Positionieren der Bleche um den Kern herum und formschlüssige Verbindung der Anordnung,
- Vakuumbeaufschlagen und Schließen der Anordnung durch Verschweißen,
- Montieren der Anordnung,
- Schneiden der Anordnung zum Entnehmen des Kerns (3) und Trennen des Einsatzes,
- Herstellen des äußeren Profils des Einsatzes durch eine Feinbearbeitung
- **dadurch gekennzeichnet, dass** die zwei Flächen des Kerns in einer Spitze zusammentreffen, wobei sie die innere Form der Vorder- oder Hinterkante wiedergeben, dass die zwei Bleche zusammentreffen, indem sie im Bereich der Spitze des Kerns parallel sind, und dass das Montieren der Anordnung durch isostatisches Warmpressen erfolgt.

2. Verfahren nach Anspruch 1, bei dem der Kern (3) auf der Hälfte jeder Fläche die Form hat, die der Außenseite (1'E) der Bleche zu verleihen ist, und auf seiner anderen Hälfte die Form hat, die der Innenseite (1'I) der Bleche zu verleihen ist, so dass bei jedem Arbeitsgang zwei Einsätze hergestellt werden.

3. Verfahren nach Anspruch 2, bei dem der Kern (3) auf der Hälfte jeder seiner Flächen eine längliche Vertiefung hat, so dass nach dem isostatischen Warmpressen die Schnittlinien (6), welche die zwei Einsätze trennen, sichtbar werden.

4. Verfahren nach einem der Ansprüche 1 bis 3, bei dem das ursprüngliche Gesenkformen der Bleche einen Sitz (8) im Bereich der Spitze der Vorder- oder Hinterkante erzeugt.

5. Verfahren nach Anspruch 4, bei dem beim Positionieren der Bleche (1) um den Kern (3) herum eine Versteifung aus Verbundfasern in dem Sitz (8) platziert wird.

6. Verfahren nach einem der Ansprüche 1 bis 5, bei dem der Kern aus feuerbeständigem Material hergestellt wird.

7. Verfahren nach einem der Ansprüche 1 bis 5, wobei der Kern (3) aus einem metallischen Material hergestellt wird, dessen Dehnungskoeffizient sich von dem der Bleche (1) unterscheidet.

8. Verfahren nach Anspruch 7, bei dem der Kern (3) mit einer nicht kontaminierenden Diffusionssperre für das metallische Material der Bleche (1) beschichtet wird.

9. Verfahren nach Anspruch 8, bei dem das metallische Material des Kerns eine Titan- oder Nickel-Legierung ist und die Sperre Yttriumoxid ist.

## Claims

1. A process for producing a metal insert, for protecting a leading or trailing edge of a composite compressor blade of an aerospace machine, by die forging sheets (1) and diffusion bonding them together, comprising steps of:
- initially forming the sheets by die forging so that they resemble the shape of the suction side (1E) and the pressure side (1I) of said insert;
- producing a core (3) taking the form of the internal cavity of the metal insert to be produced, one of its sides reproducing the internal shape of the suction side of the insert and the other side reproducing the internal shape of the pressure side of the insert;
- positioning said sheets around said core, and securely fastening the assembly;
- placing the assembly under vacuum and welding the assembly shut;
- joining the assembly;
- cutting the assembly so as to extract the core (3) and separate the insert;
- producing the external profile of the insert using a final machining operation;
- **characterized in that** the two sides of the core meet at a tip reproducing the internal shape of the leading or trailing edge, **in that** the two sheets meet at the tip of the core to lie parallel, and **in that** the assembly joining takes place by hot isostatic pressing.

2. The process as claimed in claim 1, in which half of each side of the core (3) has the shape to be given to the suction side (1'E) of the sheets, and the other half has the shape to be given to the pressure side (1'I) of the sheets, so as to produce two inserts with each operation.

3. The process as claimed in claim 2, in which the core (3) has a longitudinal midpoint indentation on each of the sides, so as to produce, after the hot isostatic pressing, visible scribe lines (6) separating the two inserts.

4. The process as claimed in one of claims 1 to 3, in which the initial die forging of the sheets creates a housing (8) at the tip of the leading or trailing edge.

5. The process as claimed in claim 4, in which a reinforcement made of composite fibers is placed in the housing (8) when the sheets (1) are positioned around said core (3).

6. The process as claimed in one of claims 1 to 5, in which the core is made of a refractory material.

7. The process as claimed in one of claims 1 to 5, in which the core (3) is made of a metal the expansion coefficient of which is different from that of the sheets (1).

8. The process as claimed in claim 7, in which the core (3) is covered with an antidiffusion barrier that will not contaminate the metal of the sheets (1).

9. The process as claimed in claim 8, in which the metal of the core is a titanium or nickel alloy and the barrier is yttrium oxide.
